# EUROPEAN PATENT SPECIFICATION

(11) **EP 3 248 509 B1**
(45) Date of publication and mention of the grant of the patent: **08.07.2020**
(21) Application number: 16186794.0
(22) Date of filing: 01.09.2016
(51) Int. Cl.: A47C 7/16, A47C 7/02, A47C 7/40, A47C 11/00

(54) **CHAIR AND METHOD FOR THE MANUFACTURING OF A CHAIR**
STUHL UND VERFAHREN ZUR HERSTELLUNG EINES STUHLS
CHAISE ET PROCÉDÉ POUR FABRIQUER UNE CHAISE

(30) Priority: 11.03.2016 CN 201620190064 U
(43) Date of publication of application: 29.11.2017
(73) Proprietor: Yotrio Group Co., Ltd, Zhejiang Province 317004 (CH)
(72) Inventor: XIE, Jianping, 317007 Linhai, Zhejiang (CN)
(74) Representative: Schulz Junghans Patentanwälte PartGmbB

(56) References cited:
- EP-A1- 1 541 059
- US-A- 6 036 273
- US-A1- 2003 025 379
- US-A1- 2004 084 951

## Description

The invention relates to a chair and a method for the manufacturing of a chair.

A chair is an item with a back rest for sitting, it is usually also referred as backrest chair. If the chair possesses armrests, it is called armchair. This backrest chair, as announced in the Chinese patent application publication CN 104 433 419 A, includes a sitting surface, a back rest and two side elements. The sitting surface is fixed between the two side elements and the back rest is located between the two side elements. The back rest of the backrest chair with the described structure is usually connected with side elements by welding or with bolts, screws and/ or other fasteners. The welding seams or fasteners in the described connection are exposed, thus severely damage the chair's appearance. Additionally, connecting by welding or fasteners makes the assembly process complicated and expensive and is difficult to operate. Another chair of this type is known from US2003025379 A1.

The problem to be solved by the invention is to provide a chair which can be produced in an easy and cost-effective way and a method for the manufacturing of such a chair.

The problem is solved by the subject matter of the chair as claimed in claim 1 as well as by a method for the manufacturing of a chair as claimed in claim 5. Specific embodiments of the invention are claimed by the dependent claims 2-6.

This invention is aimed to overcome the current technology difficulties by presenting a chair which has an easy connecting structure between its back rest and side elements.

A first aspect of the invention is a chair, comprising a sitting surface, a back rest and two side elements. The sitting surface is fixed between the side elements, and each side element comprises a front leg and a rear leg. The chair is such that the back rest is connected with each rear leg through a slide-in coupling.

Particularly, the rear legs comprise an appropriately adapted slot structure and the back rest is positioned in said slot structure with or without additional coupling elements. The slot structure may be adapted to enable an insertion, positioning and/ or fixation of the back rest by sliding. Particularly, the left end and the right end of the back rest are connected with the respective rear legs.

In this technical solution, the back rest is fixed with the side element with a slide-in coupling. When assembling, the end of the back rest is just positioned over and slid into the rear legs of the side elements. These steps are simple and easy to operate. A connecting process through welding or fasteners is not necessary, which makes an installation of the chair easier, simpler and cost-effective. Besides, the connection structure is not visible, which makes the chair look better.

In one embodiment of the invention, each rear leg of the chair comprises an essentially vertically located slot defining a hollow space and the back rest comprises a coupling element that extends at least partially into the hollow space.

Particularly, the slot longitudinally extends on both rear legs, essentially across the entire height of the back rest. It may be positioned at any side of the rear legs. Particularly, the slot is faced towards the front side of the rear leg or towards the inner side of the rear leg facing the respective other rear leg.

The slot may expand its width inside in the form of a guide rail, leading to a hollow space with an inside cross section width that is bigger than the visible outside slot width. Particularly, the coupling element comprises a protrusion on the end that extends into the hollow space. This protrusion exceeds the slot width in the manner of an undercut to fix the coupling element and, thus, the back rest to the rear leg.

Particularly, essentially vertical slots are located on the front side of the described rear legs, extending essentially on the whole height of the back rest. On the back of the right and left end sides of the back rest, coupling elements are located that can be inserted into and slid within the slots. Particularly, more than one coupling element may be arranged on each end side of the back rest. The two end sides of the back rest are both located in front of the rear leg, and the coupling elements on the back rest are positioned partly inside the slots of the rear leg. As a result, the connecting structure between the back rest and the rear leg cannot be noticed from the back of the chair. No screws or welding seams are visible and the connection is easy to manufacture.

In another embodiment of the invention, the coupling element is a bolt or a screw that is fixed on the back rest.

Particularly, several bolts and/ or screws can be arranged. Screw heads and/ or bolt heads are inserted into the slot, particularly from above, and slid within the hollow space to their final position, realizing an undercut and thus a fixation of the screw/ bolt in the hollow space. Particularly, one end of the bolts or screws is respectively fixed on the rear side of the back rest's end sides. The other ends of the bolts or screws are inserted into the plug slots, forming a very easy and secure connection.

According to the invention, each rear leg comprises an essentially vertically located slot defining a hollow space, and the left and right end sides of the back rest are positioned inside the hollow space.

The back rest is particularly located between the two rear legs. In this case, the side of each rear leg that is facing the back rest comprises an essentially vertically located slot. The slot is adapted to receive the end sides of the back rest. The slots and the back rest are particularly adapted in a manner allowing for a sliding of the back rest into the slots of the rear legs and within said slots in order to position the back rest and to realize the connection. The two end sides of the back rest are respectively slid and fixed inside the corresponding plug slots. Thus, both end sides of the back rest are respectively attached to one rear leg, and both end sides of the back rest are hidden inside the plug slots of the rear leg. As a result, the connecting structure between the back rest and the rear leg cannot be noticed from the back of the chair. Besides, the end sides of the back rest are protected.

According to the invention, the back rest comprises at least two back rest boards in an essentially horizontal alignment, and the back rest boards are arranged essentially one above the other.

Particularly, the back rest boards are vertically stacked, one above the other. The back rest boards form the back rest which particularly follows the alignment of the rear legs, which can be inclined in an angle that is typically below 30 degrees with respect to a vertical line in side view. Coupling elements may be arranged on the left and right end sides of the back rest boards to connect them into appropriately adapted slots in the rear legs. Particularly, more than one coupling element may be arranged on each end side of each back rest board. Installing the back rest boards individually enables an easier connection with the slots. At the same time, thanks to the reduction in the height of the back rest boards, this also enables an installation on curved rear legs.

According to the invention, the back rest comprises at least two separating elements which are arranged between the back rest boards and at least partially extend into the hollow space.

Particularly, the separating elements are arranged symmetrically on both sides of the back rest boards. They are preferably arranged in all spaces between back rest boards, separating the single boards and ensuring equal distances as well as horizontal alignment. Below the undermost board, another pair of separating elements may be arranged.

Separating elements and back rest boards are particularly located alternatingly inside the slots. This enables the chair's ventilation function through the back rest and makes it more comfortable to sit on.

In another embodiment, the front leg and the rear leg of each side element are connected by an armrest. This makes the chair more comfortable and improves the performance of the chair as well its stability.

In another embodiment, an end element is positioned on the top end of each rear leg. Particularly, a cap or a lid, such as a pipe cap may be positioned on top of the rear legs to close the opening, to fix the back rest and to prevent liquids from infiltrating. The end element is preferably realized correspondingly to the profile of the rear leg.

Another aspect of the invention is a method for the manufacturing of a chair, comprising the step positioning at least parts of the back rest in appropriately adapted sections of the rear legs by sliding.

Sliding in this context particularly means an essentially vertically, guided top-down movement in which at least parts of the back rest are moved while the back rest is at least partially guided in slots. The back rest board can be slid into and/ or within the slot directly or indirectly. In the case of a direct sliding, the end sides of the back rest may be directly slid into and/ or within the slot. In the case of an indirect sliding, coupling elements that are attached to the back rest board may be slid into and/ or within the slot. Particularly, said coupling elements may be screws or bolts that comprise a protrusion which is inserted into the inside cross section, realizing a fixed connection by means of an undercut.

Another embodiment of this aspect of the invention is a method for the manufacturing of a chair, comprising the steps positioning at least two back rest boards by sliding them into and/ or within appropriately adapted sections of the rear legs and positioning at least one separating element between the back rest boards, wherein the separating element is at least partially inserted into the slot.

The back rest board can be slid into the slot directly or indirectly, i.e. with coupling elements, such as screws or bolts, that protrude into the inside cross section. Particularly, the separating elements are also slid into the slots. For example, at first, two coupling elements are slid onto the slots as a basis for the first back rest board. Then, a back rest board is positioned by sliding it down the slots. These steps are repeated two to four times, as in a favorable embodiment, three to five back rest boards, particularly four back rest boards, are positioned in the slots provided by the rear legs alternately with respective separating elements. A pipe cap may be positioned on top of the rear legs to fix the back rest and to prevent liquids from infiltrating.

### Field of technology

This utility model belongs to the field of furniture technology, it involves a chair.

### Technology background

A chair is an item with a back rest for sitting, it is usually also referred as backrest chair. If the chair possesses armrests, it is called armchair. This backrest chair, as announced in the Chinese Patent "Application Publication No. CN104433419A", includes a sitting board, back rest and two side brackets, the sitting board is fixed between the two side brackets, the back rest is located between the two side brackets. The back rest of the backrest chair with the described structure is usually connected with side brackets by welding or with bolts, screws and other fasteners, the welding seams or fasteners in the described connection are exposed, thus severely damages its appearance. Additionally, connecting by welding or fasteners makes the assembly process complicated and is difficult to operate.

### Invention content

This utility model is aimed to overcome the current technology difficulties, by presenting a chair which has an easy connecting structure between its back rest and side brackets.

This utility model's objective can be achieved through the following technical solutions: a chair that includes sitting board, back rest, and two side brackets, the described sitting board is fixed between the two side brackets, its special feature is, the described side bracket include front leg and rear leg, the left and right end of the described back rest are each connected with a rear leg through plug structure.

In this technical solution, the back rest is fixed with the side bracket with plug structure, when assembling, just plug the end of the back rest into the rear leg of the side bracket, these steps are simple and easy to operate.

In the described chair, on the front side of the described rear legs are vertically located plug slots, on the back of the end side of the described back rest are positioning device that can be plugged into the slots. The two ends of the back rest are both located in front of the rear leg, and the positioning device on the back rest is inside the slots of the rear leg, as a result, the connecting structure between the back rest and the rear leg cannot be noticed from the back of the chair.

In the described chair, the described positioning device are bolts or screws that are fixed on the rear side of the back rest's end. One end of the bolts or screws are fixed on the rear side of the back rest's end, and the other end are able to stuck into the plug slots, very easy to connect.

In the described chair, the described back rest is located between the two rear legs, and the side of the rear leg that is facing another rear leg possesses vertically located plug slots. The two end sides of the described back rest are respectively plugged and fixed inside the corresponding plug slots. Both ends of the back rest are respectively plugged inside one rear leg, and both ends of the back rest are hidden inside the plug slots of the rear leg, as a result, the connecting structure between the back rest and the rear leg cannot be noticed from the back of the chair.

In the described chair, the described back rest includes several back rest boards, the described back rest boards are all horizontally located, and the back rest boards are sequentially overlapping from top to bottom. In order to enable the back rest to connect better with the plug slots, dismantle the back rest into several separate back rest boards. At the same time, thanks to the reduction in the height of the back rest boards, it can also be installed on the curved rear leg.

In the described chair, there are several intervallic located back rest stuck devices on the described plug slot in order to separate the back rest boards. The overlapping back rest boards are separated with back rest stuck device, which enables the chair's ventilation function and makes it more comfortable to sit on.

In the described chair, the front leg and rear leg on the same side of the side bracket are connected with an armrest. Through installing the armrest, it improves the performance of the chair as well its stability.

In comparison with current technology, this utility model has the following advantages:
1. This chair's back rest and the rear leg of the side bracket are connected through plug structure, this reduces the welding or fasteners connecting process, and is easier and simpler to install.
2. This chair's rear end of the back rest is hidden inside the front part or internal of the rear leg of the side bracket, this makes the chair looks better when observing it from the back.

Below is the detailed application of this utility model, to further illustrate the technical solution of this utility model, however, this utility model is not limited to such application.

### Example one:

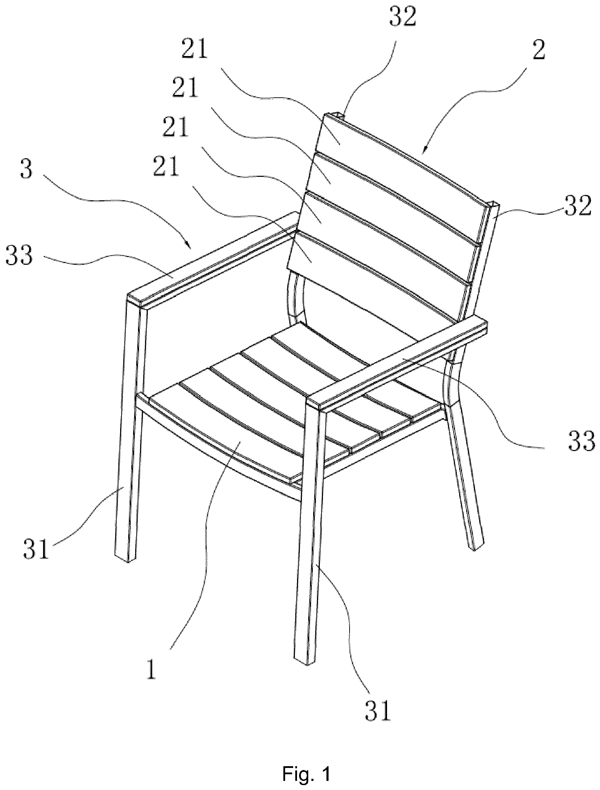

According to Figure 1, this example shows a chair which includes sitting board (1), back rest (2) and two side bracket (3), sitting board (1) is fixed between two side brackets (3), the side bracket (3) includes front leg (31) and rear leg (32), the left and right end of the described back rest (2) are each connected with one rear leg (32) through a plug structure.

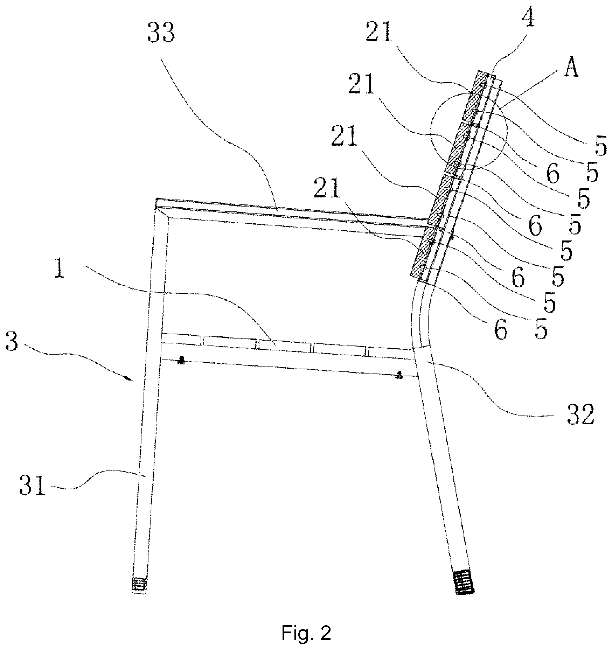

Detailed structure are as follows, according to Figure 2, 3 and 4, the front side of the described rear leg (32) possesses vertically located plug slot (4), the back rest (2) includes several back rest boards (21), the described back rest boards (21) are all horizontally located, and the back rest boards (21) are sequentially overlapping from top to bottom. There is a positioning device (5) on the back of the rear end of the back rest board which can be plugged into the plug slot (4), the back rest board (21) can slide inside the plug slot (4) using the positioning device (5), the positioning device (5) is fixed to the bolts or screws located on the back of the rear end of the back rest (2).

According to Figure 2, 3 and 5, there are several intervallic located back rest stuck devices (6) on the plug slot (4) in order to separate the back rest boards (21). The overlapping back rest boards (21) are separated with back rest stuck device (6), which enables the chair's ventilation function and makes it more comfortable to sit on.

When installing back rest (2) in this example, first install the back rest stuck device (6) inside the two plug slots (4) symmetrically, then plug the positioning device (5) on the ends of the back rest board (21) inside the corresponding plug slots (4), then push it from top to down until the rear end of the back rest board (21) reaches the back rest stuck device (6). Then stuck the back rest stuck device (6) along the two ends of the back rest board (21), continue to install the next back rest board (21), repeat these steps until installation is finished.

In this example one, there is also a possibility to connect the front leg (31) and rear leg (32) on the same side of the side bracket (3) through an armrest (33), this improves the function of this chair as well as its stability.

### Example two:

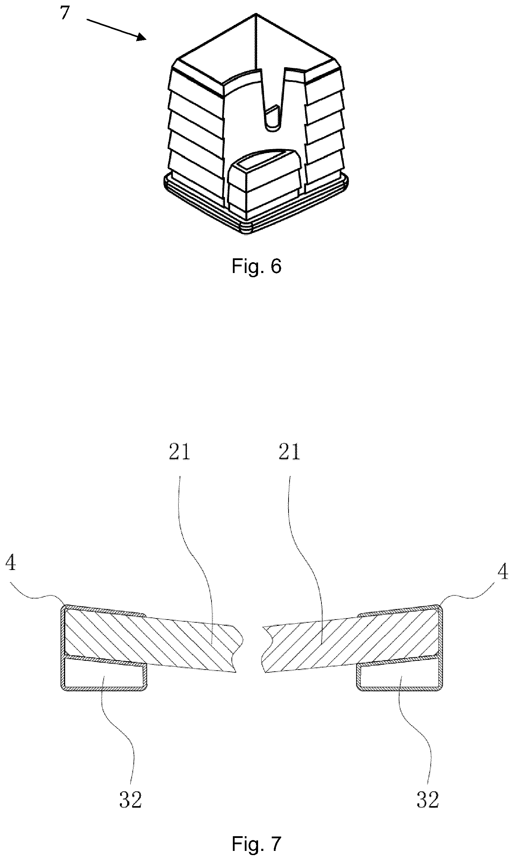

According to Figure 6, the structure of example two is similar to the one in example one, the back rest (2) also consists of several back rest boards (21), the difference is that the back rest board (21) is located between the two rear leg (32), and on the side of the rear leg (32) that faces the other rear leg (32) are vertically located plug slots (4), the two rear ends of the back rest board (21) are respectively connected and fixed to the corresponding plug slots (4).

The detailed application described in this document is merely an example in order to illustrate the idea of this utility model. The application can be modified and changed by technical staff if necessary, however, such modification and changes will not exceed the idea and scope of description of this written specification.

First point: A chair, including sitting board (1), back rest (3) and two side bracket (3), the described sitting board (1) is fixed between the two side bracket (3), its special feature is, the described side bracket (3) includes front leg (31) and rear leg (32), the left and right end of the described back rest (2) are each connected with one rear leg (32) through a plug structure.

Second point: According to the description in the first point, its special feature is, the front side of the described rear leg (32) possesses vertically located plug slot (4), the back of the rear end of the descried back rest (2) possesses positioning device (5) that can plug into the plug slot (4).

Third point: According to the description in the second point, its special feature is, the described positioning device (5) are bolts or screws that are fixed on the back of the rear end of the back rest (2).

Fourth point: According to the description in the first point, its special feature is, the described back rest (2) is located between the two rear legs (32), and the side of the rear leg (32) that is facing another rear leg (32) possesses vertically located plug slots. The two end sides of the described back rest (2) are respectively plugged and fixed inside the corresponding plug slots (4).

Fifth point: According to the description in the second or third or fourth point, its special feature is, the described back rest (2) includes several back rest boards (21), the described back rest boards (21) are all horizontally located, and the back rest boards (21) are sequentially overlapping from top to bottom.

Sixth point: According to the description in the fifth point, its special feature is, there are several intervallic located back rest stuck devices (6) on the described plug slot (4) in order to separate the back rest boards (21).

Seventh point: According to the description in the first or second or third or fourth point, its special feature is, the front leg (31) and rear leg (32) at the same side of the side bracket (3) are connected through an armrest (33). The invention is not limited to the alternatives described herein. Furthermore, all described embodiments and alternatives of the invention may be combined.

The invention is further illustrated and characterized by the following figures that show a certain example from which further embodiments and advantages can be drawn. These figures are meant to illustrate the invention but not to limit its scope.
Figure 1 shows a perspective view of a chair according to the invention.
Figure 2 shows a cross-sectional view of the chair from Figure 1.
Figure 3 shows an enlarged detail A of the back rest shown in Figure 2.
Figure 4 shows an enlarged detail of section B-B in Figure 3.
Figure 5 shows an enlarged detail of section C-C in Figure 3.
Figure 6 shows a perspective view of an end element.
Figure 7 shows a cutaway view of the connection between back rest board and rear leg of an alternative embodiment of the chair according to the invention.

Figure 1 shows a chair according to the invention. The chair includes a sitting surface 1, a back rest 2 and two side elements 3. The sitting surface 1 is fixed between the side elements 3 which each comprise a front leg 31 and a rear leg 32. The left and right end sides of the back rest 2 are each connected with one rear leg 32 through a slide-in coupling, as shown in detail in the following figures. The back rest 2 of the presented chair comprises four back rest boards 21 in an essentially horizontal alignment, and the back rest boards 21 are arranged essentially one above the other. Furthermore, the front leg 31 and the rear leg 32 of each side element 3 are connected by an armrest 33. This improves the function of this chair as well as its stability.

Figure 2 shows a cross-sectional view of the chair from Figure 1. In its upper part, the front side of the rear leg 32 comprises an essentially vertically located slot 4 defining a hollow space. Each back rest board 21 comprises two coupling elements 5 on the right and left end sides, realized as screws with protruding heads that are arranged on the back sides of the back rest boards. The coupling elements 5 partially extend into the hollow space defined by the slot 4, fixing the back rest boards 21 to the rear legs 32. The back rest boards 21 are essentially horizontally aligned and arranged essentially one above the other. Several separating elements 6 are arranged between the back rest boards 21 in the plug slot 4 in order to separate the back rest boards 21. This enables the chair's ventilation function and makes it more comfortable to sit on. During the manufacturing process, one separating element 6 is initially inserted into each slot and slid down to its final position at the end of the slot. Then, back rest boards 21 and separating elements 6 are alternately inserted into the slots and slid down to their respective final positions on top of the element inserted before.

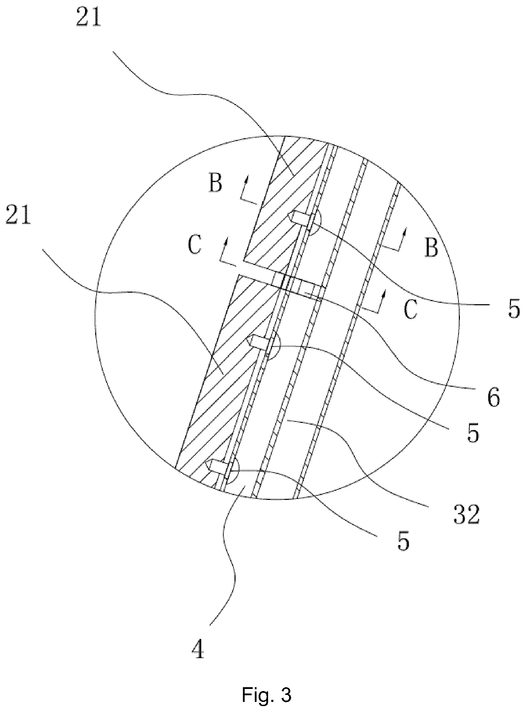

Figure 3 shows an enlarged detail A of the back rest shown in Figure 2. The separating element 6 is shown between the back rest boards 21. The coupling elements 5, realized as screws, are arranged on the back sides of the back rest boards 21 and their heads are positioned inside the slot 4.

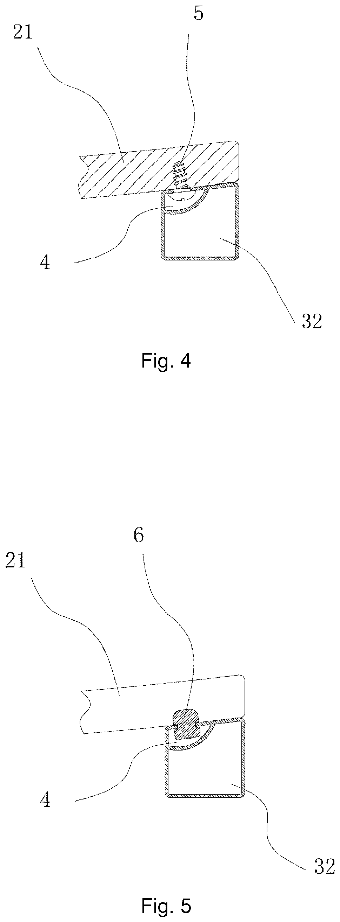

Figure 4 shows an enlarged detail of section B-B in Figure 3. The screw is shown, which is arranged in the back side of the back rest board 21 at the right end side. The rear leg 32 is pictured and it becomes evident that the hollow space defined by the slot 4 is produced as a part of the profile of the leg. The cross section is divided into the hollow space defined by the slot 4 and a separate part of the profile, shown in the lower area. By this, the stability of the profile is increased and the slot does not affect the rigidity of the rear legs 32. The diameter of the screw head is bigger than the slot width, realizing an undercut and providing a fixed connection between the rear leg 32 and the back rest board 21.

Figure 5 shows an enlarged detail of section C-C in Figure 3. In this figure, the section between two back rest boards 21 is presented. A separating element 6 is shown, partially extending into the hollow space defined by the slot 4. It comprises a constriction which enables a firm hold in the slot 4.

Figure 6 shows a perspective view of an end element 7 which is to be arranged on the top end of each rear leg 32 closing the slot 4. Therefore, is realized correspondingly to the profile of the rear leg and designed to seal the rear leg profile, shown in Figures 4 and 5. It enables a sealing effect and a stable connection through a barb structure. The end element is made e.g. from a plastic material.

Figure 7 shows a cutaway view of the connection between back rest board and rear leg of an alternative embodiment of the chair according to the invention. The back rest 2 also consists of several back rest boards 21. In this embodiment, the back rest board 21 is located between the two rear legs 32, and on the side of each rear leg 32 that faces the other rear leg 32 are vertically located plug slots 4 which are adapted to receive the left and right end sides of the back rest boards 21. The two end sides of each back rest board 21 are respectively connected and fixed to the corresponding plug slots 4, being protected from environmental influences.

**List of reference signs**

| | |
|---|---|
| Sitting surface | 1 |
| Back rest | 2 |
| Back rest board | 21 |
| Side element | 3 |
| Front leg | 31 |
| Rear leg | 32 |
| Armrest | 33 |
| Slot | 4 |
| Coupling element | 5 |
| Separating element | 6 |
| End element | 7 |

## Claims

1. Chair, comprising a sitting surface (1), a back rest (2) and two side elements (3), wherein the sitting surface (1) is fixed between the side elements (3),
wherein each side element (3) comprises a front leg (31) and a rear leg (32), and the back rest (2) is connected with each rear leg (32) through a slide-in coupling, wherein each rear leg (32) comprises an essentially vertically located slot (4) defining a hollow space and
- the back rest (2) comprises a coupling element (5) that extends at least partially into the hollow space or
- the left and right end sides of the back rest (2) are positioned inside the hollow space,
**characterized in that**
the back rest (2) comprises at least two back rest boards (21) in an essentially horizontal alignment, and the back rest boards (21) are arranged essentially one above the other, wherein the back rest (2) comprises at least two separating elements (6) which are arranged between the back rest boards (21) and at least partially extend into the hollow space.

2. Chair according to claim 1, wherein the coupling element (5) is a bolt or a screw that is fixed on the back rest (2).

3. Chair according to at least one of the claims 1-2, wherein the front leg (31) and the rear leg (32) of each side element (3) are connected by an armrest (33).

4. Chair according to at least one of the claims 1-3, wherein an end element (7) is positioned on the top end of each rear leg (32).

5. Method for the manufacturing of a chair according to at least one of the claims 1 to 4, comprising the step
- positioning at least parts of the back rest (2) in appropriately adapted sections of the rear legs (32) by sliding.

6. Method for the manufacturing of a chair according to claim 5, comprising the steps
- positioning at least two back rest boards (21) by sliding them into and/ or within appropriately adapted sections of the rear legs (32), and
- positioning at least one separating element (6) between the back rest boards (21), wherein the separating element (6) is at least partially inserted into the slot.

## Patentansprüche

1. Stuhl, umfassend eine Sitzfläche (1), eine Rückenlehne (2) und zwei Seitenelemente (3), wobei die Sitzfläche (1) zwischen den Seitenelementen (3) befestigt ist,
wobei jedes Seitenelement (3) eine vorderes Bein (31) und ein hinteres Bein (32) aufweist und die Rückenlehne (2) mit jedem hinteren Bein (32) durch eine Einschubverbindung verbunden ist, wobei jedes hintere Bein (32) einen im Wesentlichen vertikal angeordneten Schlitz (4) aufweist, der einen Hohlraum definiert und
- die Rückenlehne (2) ein Verbindungselement (5) aufweist, das sich zumindest teilweise in den Hohlraum erstreckt oder
- die linke und rechte Endseite der Rückenlehne (2) innerhalb des Hohlraums positioniert sind,
**dadurch gekennzeichnet, dass**
die Rückenlehne (2) mindestens zwei Rückenlehnenplatten (21) in einer im Wesentlichen horizontalen Ausrichtung aufweist, und die Rückenlehnenplatten (21) im Wesentlichen übereinander angeordnet sind, wobei die Rückenlehne (2) mindestens zwei Trennelemente (6) aufweist, die zwischen den Rückenlehnenplatten (21) angeordnet sind und sich zumindest teilweise in den Hohlraum erstrecken.

2. Stuhl nach Anspruch 1, wobei das Verbindungselement (5) ein Bolzen oder eine Schraube ist, der bzw. die an der Rückenlehne (2) befestigt ist.

3. Stuhl nach mindestens einem der Ansprüche 1-2, wobei das vordere Bein (31) und das hintere Bein (32) jedes Seitenelements (3) durch eine Armlehne (33) verbunden sind.

4. Stuhl nach mindestens einem der Ansprüche 1-3, wobei ein Endelement (7) am oberen Ende jedes hinteren Beins (32) angeordnet ist.

5. Verfahren zur Herstellung eines Stuhls nach mindestens einem der Ansprüche 1 bis 4, umfassend den Schritt
- Positionieren zumindest von Teilen der Rückenlehne (2) in entsprechend angepassten Abschnitten der hinteren Beine (32) durch Einschieben.

6. Verfahren zur Herstellung eines Stuhls nach Anspruch 5, umfassend die Schritte
- Positionieren von mindestens zwei Rückenlehnenplatten (21) durch Einschieben von ihnen in und/oder innerhalb von entsprechend angepassten Abschnitten der hinteren Beine (32), und
- Positionieren von mindestens einem Trennelement (6) zwischen den Rückenlehnenplatten (21), wobei das Trennelement (6) zumindest teilweise in den Schlitz eingefügt ist.

## Revendications

1. Chaise, comprenant une surface d'assise (1), un dossier (2) et deux éléments latéraux (3), la surface d'assise (1) étant fixée entre les éléments latéraux (3),
chaque élément latéral (3) comprenant un pied avant (31) et un pied arrière (32), et le dossier (2) étant raccordé avec chaque pied arrière (32) par un accouplement par coulissement, chaque pied arrière (32) comprenant une fente (4) située essentiellement à la verticale, définissant un espace creux et
- le dossier (2) comprenant un élément d'accouplement (5) qui s'étend au moins partiellement dans l'espace creux ou
- les côtés d'extrémité gauche et droite du dossier (2) étant à l'intérieur de l'espace creux,
**caractérisée en ce que**
le dossier (2) comprend au moins deux planches de dossier (21) en un alignement essentiellement horizontal, et les planches de dossier (21) sont disposées essentiellement l'une au-dessus de l'autre, le dossier (2) comprenant au moins deux éléments de séparation (6) qui sont disposés entre les planches de dossier (21) et s'étendent au moins partiellement dans l'espace creux.

2. Chaise selon la revendication 1, dans laquelle l'élément d'accouplement (5) est un boulon ou une vis qui est fixé sur le dossier (2).

3. Chaise selon au moins l'une quelconque des revendications 1 à 2, dans laquelle le pied avant (31) et le pied arrière (32) de chaque élément latéral (3) sont raccordés par un accoudoir (33).

4. Chaise selon au moins l'une quelconque des revendications 1 à 3, dans laquelle un élément d'extrémité (7) est positionné sur l'extrémité supérieure de chaque pied arrière (32).

5. Procédé pour la fabrication d'une chaise selon au moins l'une quelconque des revendications 1 à 4, comprenant l'étape suivante :
- le positionnement d'au moins des parties du dossier (2) dans des sections adaptées de manière appropriée des pieds arrière (32) par coulissement.

6. Procédé pour la fabrication d'une chaise selon la revendication 5, comprenant les étapes suivantes :
- le positionnement d'au moins deux planches de dossier (21) par coulissement de celles-ci dans et/ou à l'intérieur de sections adaptées de manière appropriée des pieds arrière (32), et
- le positionnement d'au moins un élément de séparation (6) entre les planches de dossier (21), l'élément de séparation (6) étant au moins partiellement inséré dans la fente.
